**Europäisches Patentamt**

**European Patent Office**

**Office européen des brevets**

(19)

(11) **EP 1 083 022 A2**

(12) **EUROPÄISCHE PATENTANMELDUNG**

(43) Veröffentlichungstag:
**14.03.2001 Patentblatt 2001/11**

(51) Int. Cl.[7]: **B23Q 7/14**

(21) Anmeldenummer: **00119382.0**

(22) Anmeldetag: **12.09.1998**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(62) Dokumentnummer(n) der früheren Anmeldung(en) nach Art. 76 EPÜ:
**98203072.8 / 0 988 925**

(71) Anmelder: **Bucher, Urs**
**6064 Kerns (CH)**

(72) Erfinder: **Bucher, Urs**
**6064 Kerns (CH)**

(74) Vertreter: **Arato, Laszlo**
**Seebuchtstrasse 19**
**6374 Buochs (CH)**

Bemerkungen:
Diese Anmeldung ist am 11 - 09 - 2000 als Teilanmeldung zu der unter INID-Kode 62 erwähnten Anmeldung eingereicht worden.

(54) **Werkstückträger mit Speicherantrieb**

(57) Es wird für ein Transfersystem ein Werkstückträger (1) vorgeschlagen, das Werkstücke auf der Ladefläche (5) für die Bearbeitung und/oder Ergänzung zu Arbeitsstationen bringt und ein Speicherantrieb, ein Energiespeicher (SP), ein Motor (M) und eine Steuerung aufweist. Der Energiespeicher (SP), kann während dem Aufenthalt in einer Arbeitsstation so viel Energie geladen, dass der Werkstückträger zur nächsten Arbeitsstation fahren kann und dabei über eine Reserve an Energie verfügt, die für Betriebsunterbrüche zu überbrücken reicht.

Die Werkstückträger $(1,1',1^n)$ lassen sich durch die Kontaktsysteme AS/AB', und BS/BB', rastend an einander koppeln und je nach Bedarf, Energie von der Arbeitsstation durch den Kontakt (K1) in den Speichern $(SP, SP', SP^n)$ laden und Daten via Kontakt (K2) unter sich und/oder mit der Arbeitsstation tauschen.

Fig. 1

EP 1 083 022 A2

**Beschreibung**

Die Erfindung betrifft einen mobilen Werkstückträger mit Speicherantrieb nach dem Oberbegriff von Anspruch 1.

Ein bekanntes Transfersystem fördert Werkstücke mit Werkstückträgern von Arbeitsstation zu Arbeitsstation einer vorzugsweise automatisierten Fertigung. Die Förderung der Werkstückträger erledigen zirkulierende Bänder oder Ketten eines zentralen Transmissionsantriebs, der ständig und gleichförmig läuft. Bei der Arbeitsstation verhindern Nocken (Stoppzylinder etc.) die Fahrt der Werkstückträger, die ansonsten vom Förderband mitgenommen würden. In der Arbeitsstation folgt die Positionierung und/oder Zentrierung der Werkstückträger (Indexierung), je nach Art der Bearbeitung und je nach Konzept der Anlage werden sie auf dem Förderband gelassen oder vom Förderband durch Abheben gelöst. Zum Schluss der Bearbeitung in der Station wird der Werkstückträger auf das Band zurückgelegt und von diesem zur nächsten Arbeitsstation transportiert. Das geschilderte Fördersystem ist einfach und billig, hat jedoch Nachteile, die je nach Art des Werkstückes stark ins Gewicht fallen. Das System eignet sich für eher flache Werkstücke, denn das abrupte Stoppen des Werkstückträgers macht es zwingend, wegen Kippgefahr des Huckepacks, den gemeinsamen Schwerpunkt tief zu halten. Das System ist nur für robuste Werkstücke geeignet, die auf Erschütterung unempfindlich sind und schliesslich dann bevorzugt, wenn in der Umgebung der Anlage der Aufenthalt von Menschen gemieden wird. Ansonsten sind Puffer und Dämpfungselemente zu verwenden, die die Knall- und Schlaggeräusche mildern helfen.

Die „Rochade" der Werkstückträger in der Arbeitsstation, wo es um die Ausscheidung des bearbeiteten Werkstücks und die Belieferung der Arbeitsstation mit einem unbearbeiteten Werkstück geht, dauert lange, weil die Werkstückträger nur durch die Reibung beschleunigt werden. Die Erhöhung der Fördergeschwindigkeit würde die Wechselzeit verkürzen, was aber zur Überschreitung der höchstzulässigen Aufprallkräfte beim Stoppen und Auffahren der Werkstückträger im Stau zur Folge hat. Ein weiterer Nachteil zirkulierender Bänder oder Ketten ist die grosse Trägheit der Konfiguration ihrer Förderstrecke, und dass die Realisierung von Weichen, Umlenkungen und Querförderer etc. sehr umständlich und aufwendig ist. Gravierender Nachteil solcher Anlagen ist ferner, dass sie den Stau der Werkstückträger tolerieren, so dass sich das laufende Förderband fortdauernd am blockierten Werkstückträger reibt und dass zur Kontrolle der Reibung die Anzahl der Werkstückträger und die maximale Last des einzelnen Werkstückträgers pro Förderstrecke zu beschränken ist. Schliesslich produziert das dauernd laufende Förderband einen Abrieb, welcher unerwünscht und unter Reinraumbedingungen ausgeschlossen ist.

Conveyor genannte Transfersysteme, wo die Werkstückträger auf Schienen fahren und sich zum Fortbewegen an eine zentral getriebene Transportkette kuppeln, konnten sich nicht als taugliche Alternative für Werkstückgewichte von unter 50 kg erweisen.

Es gibt Transferstrassen mit selbst fahrenden Werkstückträgern, die von Stromschienen, wie bei der elektrischen Eisenbahn, versorgt sind oder, wie der Trolleybus, mit den bordeigenen Akkumulatoren alternativ operieren, aber auch selbst fahrende Flurförderfahrzeuge, die seit geraumer Zeit in der Fertigung bekannt sind und als Werstückträger gebraucht werden. Die Energieversorgung dieser Werkstückträger erfolgt mit externer oder interner Stromversorgung, also Stromschienen und Stromabnehmern oder mitfahrenden Traktionsbatterien. Dank dem Vorteil dieser Systeme ist der autonome Transport von Werkstücken im Bereich ab ca. 50 bis 2000 kg gedeckt. Solche Fahrzeuge verkehren eigenständig, laut- und schienenlos von Arbeitsstation zu Arbeitsstation. Die Traktionsbatterie deckt den Energiebedarf der Werkstückträger für 2 bis 5 Tage. Danach fahren die Werkstückträger zur Ladestation, wo ihre Akkumulatoren über Nacht oder am Wochenende aufgeladen werden. Auf diese Art wird im Automobilwerk die Montage von Baugruppen, wie Motorblock und Karosserie, aber auch der Zusammenbau von Fahrzeugen vorgenommen.

Die Verwendung dieser Technik für Werkstückgewichte von unter 50 kg vermochte sich nicht zu etablieren. Der Transport dieser Werkstücke erfolgt vorwiegend auf vom Boden überhöhten Transferstrassen. Für solche Transferstrassen sind Lösungen mit selbst fahrenden Werkstückträgern bekannt, die über Stromschienen oder lokale Akkumulatoren gespiesen werden. Bei den Stromschienen ergibt sich ein aufwendiger Schienenbau mit Weichen etc., der die Vorteile des selbst fahrenden Werkstückträgers deutlich beschränkt.

Die Energiespeicher wie die Nickel-Cadmium-Akkus leiden gerne unter dem Memory-Effekt: Wird der Akku mehrmals nur halb entladen und dann wieder aufgeladen, „merkt" sich der Akku diesen Zustand. Sinkt die Ladung einmal unter die Hälfte, bricht plötzlich die Spannung zusammen. Zum Glück kann der Memory-Effekt wieder überschrieben werden, indem der Akku ganz entladen wird. Aus diesen Umständen folgt aber, dass der Akkumulator eines Selbstfahrantriebes die Energie für mehrere hundert Fahrten speichern muss, damit die Anzahl der Ladezyklen soweit verringert wird, dass sich der Einsatz rechtfertigen lässt. Da die Akkumulatoren für mehrere hundert Fahrten zu schwer sind, scheitern alle Bemühungen am Aufwand und Nutzen für deren Einsatz im Anwendungsbereich der kurzen Strecken (>= 2 m) und kurzen Verweilzeiteri (< 1 s).

Obwohl es an Bedarf an Transferstrassen für Werkstückgewichte von unter 50 kg nicht mangelt, vermochten sich all diese Systeme nicht durchzusetzen. Die Gründe dafür sind, dass ihre Erstellung und vor allem ihre Änderung und Anpassung unverhältnismässig aufwendig ist und ein Missverhältnis zwischen Gesamtstrecke und Anzahl der Haltestellen, der kurzen Verweilzeit an der Station, der hohen Beschleunigungen der Werkstückträger, die massive Ansprüche an den Energiehaushalt der Batterien stellt, sowie der hohe Energiekonsum und die hohe Entlade- und Ladesequenz (aus Bremsstrom und Nachladen an der Station) die handelsüblichen Akkumulatoren überfordern. Der wesentliche Grund dieser Überforderung besteht in der kurzen Ladezeit und der daraus resultierenden Häufigkeit der Ladezyklen, die die Lebensdauer handelsüblichen Akkumulatoren ruiniert.

Es gibt Geräte, wie mobile Spielzeuge und Stromschienenfahrzeuge, die als Energiespeicher bordeigene Kondensatoren verwenden. Spielzeuge fahren mit dem Kondensatorenstrom, die Stromschienenfahrzeuge überbrücken die lokalen Versorgungslücken der Netzspeisung, die durch Weichen und Kreuzungen der Stromschienen entstehen. Während bei letzteren die Ladezeit keine Rolle spielt, bieten Spielzeuge für die Forderungen der Industrie in Sachen Nutzlast, Verfügbarkeit, Ladezeit und Lebensdauer eigentlich keinen Lösungsansatz.

Dennoch wird für Werkstückträger der vorliegenden Erfindung ein Speicherantrieb nach dem Anspruch 1 vorgeschlagen.

Bei einem konventionellen Fördersystem wird zum Ausschalten der Anlage das Fördersystem abgeschaltet und die Werkstückträger bleiben auf der Strecke stehen. Zum Einschalten wird das Förderband eingeschaltet und die Werkstückträger fahren wieder weiter. Bei den selbstfahrenden Werkstückträgern ergeben sich ohne spezielle Massnahmen Probleme, die darin bestehen, dass sich die Energiespeicher bei einem längeren Stillstand (einige Tage) der Anlage (durch Selbstentladung und durch den Stromkonsum der Steuerung im Wartezustand) entleeren. Eine Wiederinbetriebnahme der vorgeschlagenen Werkzeugträger gestaltet sich schwieriger. Kondensatoren haben eine grössere Selbstentladung und weniger Energieinhalt als baugleiche Akkumulatoren. Mit Akkumulatoren lässt sich die maximale Stillstandzeit erheblich verlängern. Nach einem langen Betriebsunterbruch einer Anlage mit Akkumulatoren ist das automatische Anfahren ebenfalls nicht mehr gewährleistet.

Die vorliegende Erfindung löst diese Aufgabe der selbst fahrenden Werkstückträger für Kondensatoren und Akkumulatorenspeicher.
Wird eine Anlage mit selbst fahrenden Werkstückträgern ausgeschaltet, bleiben die Werkstückträger, die in der Station sind, in der Station stehen. Die restlichen Werkstückträger fahren solange, bis sie entweder in einer Station ankommen oder bis sie auf einen weiteren Werkstückträger auffahren. Das heisst, die Fahrstrecken leeren sich, und es bilden sich vor jeder Station kleine Staus. Die Erfindung schlägt ein besondere Art der Energieübertragung vor, um die Energie vom Werkstückträger in der Station, welcher wiederum von der Station versorgt wird, zum ersten Werkstückträger im Stau zu übertragen, der wiederum, dank der Erfindung, die Energie zum nachfolgenden Werkstückträger überträgt. Mit dieser Massnahme der Erfindung werden die Werkzeugträger der ganzer Warteschlange mit Energie versorgt. Damit die Energieversorgung der Station nicht überlastet wird, wird die Energie der einzelnen Werkstückträger rationiert. Die Zuteilung der Ration erfolgt anhand der Position in der Warteschlange und dem Energiebedarf und wird von den Werkstückträgern selber ausgehandelt. Die Positions- und Rations-Zuteilung wird durch eine Datenkommunikation zwischen den Werkstückträgern ermöglicht, die analog der Verkuppelung der Energie entsteht. Für die Rationierung werden die folgenden Regeln angewandt:
Zuerst erhalten alle Werkstückträger so viel Energie, bis sie in der Lage sind, in die Warteschlange nachzurücken. Der Werkstückträger in der Station muss mindestens solange warten, bis alle Werkstückträger diese minimale Ration von Energie geladen haben. Danach werden die Werkstückträger in der Reihe, mit Beginn der Werkstückträger in der Station, nachgeladen. Sobald dieser die Station verlässt, rücken die restlichen Werkstückträger nach und der nächste wird mit höchster Priorität geladen.

Dank der Erfindung ist es möglich, eine Anlage auch dann zu starten, wenn die Energiespeicher der Werkstückträger ganz entladen sind. Auf diese Weise ist es sehr einfach, den Bestand der Anlage durch neue Werkstückträger zu ergänzen oder auf der Strecke stehengebliebene Werkstücksträger wieder in Betrieb zu nehmen, da es genügt, sie lediglich manuell in eine Kolonne bei einer Station zu stauen, wo sich der Ladevorgang von selbst erledigt.

Ein weiterer Vorteil der Erfindung ist, dass sich die Verweildauer der Werkstückträger in der Station dadurch optimieren lässt, dass sich mehrere Werkstückträger während des Wartens vor der Station aufladen lassen, indem der nachgerückte Werkstückträger bereits vor dem Wechsel eine Teil- oder Volladung erhält.

Wenn die Fahrstrecke etwa 2 m lang ist, reicht die an der Station während weniger als 1 Sekunde Verweilzeit geladene Energie zum Weiterfahren auch nach einem Stopp und/oder Warten von einigen Stunden auf der Fahrstrecke, um Betriebsunterbrüche der Anlage (Betriebsstörung) tolerieren zu können und dass sich die Werkstückträger bei einem Betriebsunterbruch immer so vor einer Station stauen, dass alle gestauten Werkstückträger mit Energie von der Station versorgt werden und somit sicherstellen, dass die ganze Anlage komplett stillgelegt werden kann und danach ein selbständiges Aufstarten der Anlage, selbst bei komplett leeren Energiespeicher der Werkstückträger, mit Sicherheit gewährleistet ist.

Die vorliegende Erfindung löst somit die Aufgabe eines selbstfahrenden Werkstückträgers, dessen Energiehaushalt eine kürzere Streckensequenz deckt, kurzes Verweilen an einer Station zulässt und dabei ausreichende Speicherreserven verschafft, um Betriebsunterbrüche zu überbrücken und das Nachladen und das Aufstarten der Anlage mit „quasi leeren Energiespeichern" auf den Werkstückträgern erlaubt.

Die Lösung dieser Aufgabe erfolgt gemäss den Merkmalen der Patentansprüche 1 bis 10.

Die Vorteile der vorgeschlagenen Lösung sind vielfältig. Für die Montagetechnik ist sie eine Revolution, indem es endlich eine taugliche und wirtschaftliche Antriebstechnik für selbst fahrende autonome Werkstückträger gibt. Die verlangten Lade- und Entladezyklen erfüllen die vorgeschlagenen Kondensatoren, weil sie sich sehr schnell aufladen lassen und dafür bestens geeignet sind. Die Kondensatoren speichern die Energie für eine einzige Sequenz einer Fahrstrecke, die von einer Station bis zur nächsten reicht, da sie von Station zu Station fahren und jedesmal in eine Station gelangen, wo sie vor dem Abfahren geladen werden. Von Vorteil ist, dass die Gestalt eines Kondensator-Speichers trotz geringerer Energiedichte kleiner ist als die äquivalente Grösse eines Akkumulatorspeichers. Ein weiterer Vorteil des vorgeschlagenen Kondensator-Speichers ist, dass er 500 bis 5000 mal mehr Lade- und Entladezyklen erträgt als die Akkumulatoren.

Ein weiteren Vorteil der Erfindung ist, dass dank einer Zusatzschaltung im Notbetrieb, was höchst selten vorkommt, die nächste Station im Kriechgang und somit mit dem geringsten Bedarf an Energie angefahren wird.

Für die vorgeschlagene Lösung der Steuerung eignen sich Mikrokontroller, die neben dem Mikroprozessor die nötigen Speicherbausteine (RAM, ROM, EEPROM etc.) und Komponenten zur direkten Ansteuerung der Peripherie (analoge und digitale Ein- und Ausgänge, Zähler, Spannungsüberwachungen etc.) im Baustein selbst enthalten, wie die 68HC08/C11/C12/C16 Familien der Firma Motorola oder die 5T6, 5T7 der Firma Thomson sowie Derivate dieser Bausteine, die bereits auf den Batteriebetrieb optimiert sind und im Stand-by-Zustand fast ohne Leistung auskommen.

Im folgenden wird die Erfindung anhand von Zeichnungen näher erläutert, die lediglich ein Ausführungsbeispiel darstellen.

Fig.1      zeigt die Ansicht eines Werkstückträgers und

Fig.2      zeigt das Blockschema des kompletten Speicherantriebes.

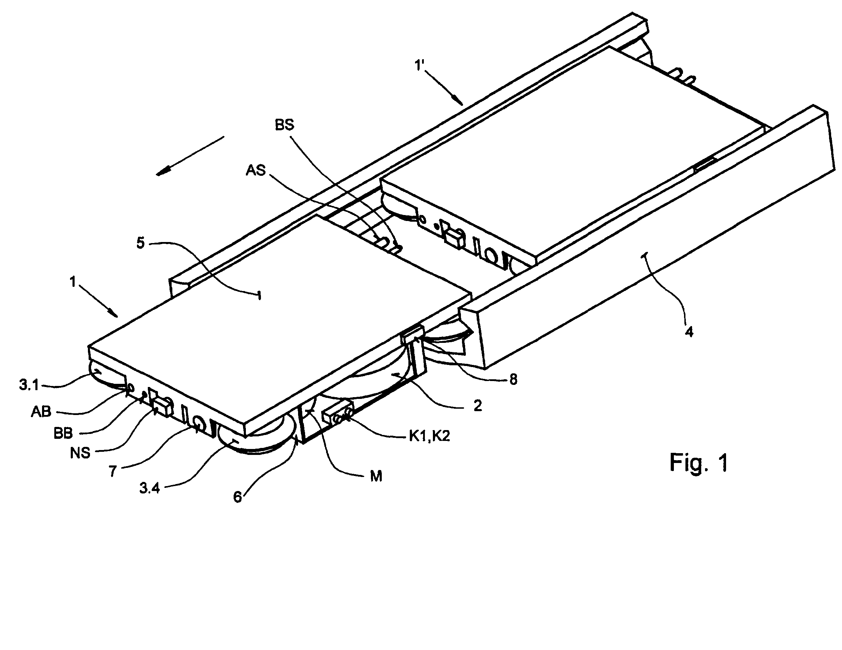

Der in der Fig. 1 gezeigte Werkstückträger mit Speicherantrieb 1 hat eine Schienenführung 4 und ist mit den Führungsrädern 3.1 bis 3.4 ausgerüstet. Seine Eigenmasse beträgt 2,5 kg. Er besitzt eine Ladefläche 5 von 160 x 160 mm und ist für eine (nicht gezeigte) Nutzlast (ein positioniertes und fixiertes, aber nicht gezeigtes Werkstück) von 3 kg ausgelegt, die zur Bearbeitung oder Ergänzung auf einer maximalen Fahrstrecke von 10 m bei 12 m/min Höchstgeschwindigkeit und einer maximalen Beschleunigung von 0,6 m/s2 mit dem Motor M befördert werden kann, der eine installierte Motorleistung von 3,0 W und eine theoretische Motorleistung von 1,2 W hat und das Reibrad 2 treibt. Die Bearbeitung des Werkstückes oder die Ergänzung mit anderen Werkstücken wird in Arbeitsstationen erledigt, die ausserhalb der Darstellung und entlang der Schiene 4 liegen und Start- und Zielorte des Werkstückträgers 1 sind. Der Werkstuckträger 1 ist mit einem Speicherantrieb 6, einer Kontaktstelle K1 für die Energieversorgung und einer Kontaktstelle K2 für die Datenübermittlung von der Station zum Werkstückträger, Kontaktsystemen AS/AB' für die Energieübertragung von Werkstückträger zu Werkstückträger, Kontaktsystemen BB/BS' zur Datenübermittlung von Werkstückträger zu Werkstückträger, sowie einem Sensorensystem 8 für die Stationseinfahrt und Positionierung in der Station und einem Abstandsensor 7 und (nicht gezeigten) Andockstellen zur Positionierung und Indexierung der Werkstückträger ausgerüstet.

Die gezeigten Kontaktstellen K1 und K2 sowie die Kontaktsysteme AB/AS und BB/BS sind in der Zeichnung nur symbolisch angedeutet. Sie können in der Realität aus mehrpoligen mechanischen Kontakten bestehen oder auch mit kontaktlosen Techniken, die Energie induktiv und die Daten induktiv oder optisch übertragen. Als weitere Option liesse sich mit der Modulationstechnik die Energie und die Datenübertragung mit Kontakten wie auch kontaktlos kombinieren. Die Kontaktsysteme AS/AB und BB/BS sind so gestaltet, dass sie im angedockten Zustand einrasten und keine Abstosskräfte entwickeln.

Das Sensorsystem 8 besteht vorzugsweise aus mehreren Hallsensoren, die dank der Anordnung von Permanentmagneten und deren Polen in und vor der Station Informationen zur Einfahrt des Werkstückträgers in die Station und seiner Position in der Station geben.

Der Abstandsensor 7 ist mit einem Ultraschallgeber realisiert, welcher neben einem voranfahrenden Werkstückträger auch Hindernisse auf der Strecke erkennt. Der Sensor 7 kann auch, zur Erkennung des voranfahrenden Werkstückträgers, ein Hallsensor sein und jeder Werkstückträger auf der Rückseite über einen Permanentmagneten verfügen.

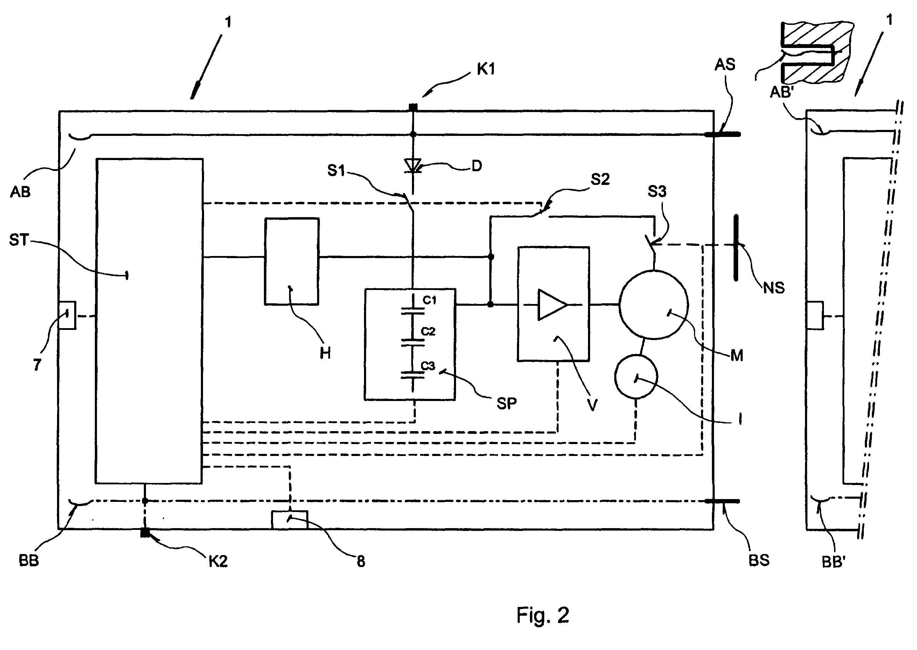

Die Figur 2 zeigt das Blockschema des kompletten Speicherantriebes mit der Steuerung ST, dem Energiespeicher SP, der Endstufe V und dem DC-Motor M mit dem Inkrementalgeber I. Die Symbolie der Schalter, durch S1, S2 und S3 angedeutet, sind mechanische oder elektronische Schalter.

Die Steuerung ST überwacht den Energiespeicher SP und regelt die Fahrt des Werkstückträgers und somit die Bestimmung der Fahrgeschwindigkeit (Kriechfahrt, geregeltes Fahren etc.) nach dem Energiegehalt des Speichers SP, regelt die Fahrt des Werkzeugzeugträgers und des Ladevorgangs der Energiespeicher in und vor den Stationen, die Ausregelung der Position in den Stationen, das Überwachen und Auswerten der Sensoren (z.B. Positionssensor 8, Abstandsensor 7, Nothaltsensor NS etc.) und die Kommunikation zur übergeordneten Steuerung (Leitrechner) in den Stationen sowie mit den im gemeinsamen Stau stehenden Werkstückträgern.

Die Steuerung löst diese Aufgaben mit einem Mikrokontroller, der neben dem Mikroprozessor, die nötigen Speicherbausteine (RAM, ROM, EEPROM etc.) und Komponenten zur direkten Ansteuerung der Peripherie (analoge und digitale Ein- und Ausgänge, Zähler, Spannungsüberwachungen etc.) im selben Baustein enthalten, wie der Mikrokontroller L9942 der Firma Thomson, der die Regelung des Antriebsmotors auch erledigt. Er ist auf Spannungsschwankungen unempfindlich, verbraucht im Stand-by nur ca. 70 µA und verfügt über eine integrierte Endstufe und eine H-Brücke (für max. 7 A) für den Motor und eine Schnittstelle (CAN) für die Kommunikation. Der L9942 allein ist imstande, das Energiemanagement (überwachen, laden der Energiespeicher) und die Steuerung und Regelung des Fahrbetriebes einwandfrei zu erledigen.

Für die Funktion des Werkstückträgers ist es unerlässlich, dass er geladen wird. Dazu steht er in der Arbeitsstation oder in eine Warteschlange oder Kolonne vor der Arbeitsstation. Je nach Standort fliesst die Ladeenergie über die Stationskontaktstelle K1 oder den Andockkontakt AB durch die Diode D über den Schalter S1 in den Speicher SP. Wenn der Werkstückträger in eine Warteschlange oder in der Kolonne steht, verhindert die Diode D, dass sich der Speicher SP in einen anderen Speicher eines angedockten Werkstückträgers entleert. Mit dem Schalter S1 regelt die Steuerung den Energiebezug beim Laden, je nach dem eigenen Energiebedarf und in Abhängigkeit der zugeteilten Ration.

Im Speicher SP sind drei UltraCap Kondensatoren von je 8 F, die, um die Betriebsspannung zu erreichen, seriell geschaltet und auf je 2 V zu laden sind, was die Leerlaufspannung von 6 V ergibt. Der Ladevorgang dauert so lange, bis der Speicher SP wieder voll ist. Da der Speicher SP mit Kondensatoren realisiert ist, ist der Ladevorgang schnell genug, um den Aufenthalt des Werkstückträgers 1 in der Arbeitsstation keinesfalls zu verzögern. Wenn mehrere Werkstückträger 1, 1', 1" vor einer Station im Stau stehen, so dass alle in der Kolonne befindlichen Werkstückträger 1, 1', 1" über die Kontaktsysteme AB/AS/AB' mit Ladeenergie versorgt werden, ist es möglich, die Ladezeit der Werkstückträger 1', 1" in der Station noch weiter zu verkürzen, da mehrere Werkstückträger 1, 1', 1" bereits zeitgleich geladen worden sind. Wenn ein geladener Werkstückträger 1 die Station verlässt ist der nachrückkende Werkstückträger 1' bereits teilweise bis ganz geladen. Darum ist es nicht notwendig, in der Station alle Energiespeicher SP immer vollständig zu füllen. Die Steuerung ST kann die gespeicherten Daten statistisch

über die Wegstrecke und deren Energieverbrauch auswerten, und bei der Überwachung des Energiespeichers SP des Werkstückträgers 1 die benötigte Energie mit dem Energievorrat vergleichen und darüber entscheiden, ob eine Fahrt mit einer Teilladung gestartet werden soll oder nicht. Dieses Vorgehen lohnt sich deshalb, weil damit die Anzahl Lade- und Entladzyklen gesenkt werden und somit die Lebensdauer der Kondensatoren erhöht und die Ladezeit verkürzt werden kann. Besonders vorteilhaft ist, wenn sich viele Werkstückträger mit leerem Energiespeicher in der Kolonne befinden, wie dies beim Einschalten einer Anlage nach einer längeren Stillstandszeit zu erwarten ist, dass die Werkstückträger bereits mit einer Teilladung auf die Strecke gehen und somit die Betriebsbereitschaft der Anlage schneller erreicht wird.

Im Fahrbetrieb schaltet die Steuerung ST den Motor M über den Verstärker V ein, so dass Energie aus dem Speicher SP zum Motor M fliesst und diesen in Bewegung setzt. Die daraus resultierende Fahrbewegung des Werkstückträgers wird von der Steuerung ST gemäss Rückmeldung des Inkrementalgebers I, nach dem aktuellen Weg, bzw. der Geschwindigkeit und den gespeicherten Fahrprofilen geregelt.

Der Steuerung ST des Werkstückträgers 1 ist vorteilhafterweise ein Abstandsensor 7 überlagert, so dass die Gefahr des Auffahrens auf Hindernisse und das unsanfte Auffahren auf eine stehende Kolonne verhindert wird. Zusätzlich übernimmt der Nothaltschalter NS das sofortige Abschalten der Energiezufuhr beim Auftreffen auf ein Hindernis.

Der Werkstückträger 1 fährt solange, bis er über die Sensoren 8 ein Station erkennt oder über den Sensor 7 einen Werkstückträger $1^n$ erkennt. Mit Hilfe der Sensoren 7, 8 ist es möglich, ein kontrolliertes Einfahren in die Station vorzunehmen oder sanft an einen stehenden Werkstückträger $1^n$ anzukoppeln, so dass der Werkstückträger $1^n$ über die einrastenden Kontaktsysteme $AS/AB^n$ und $BS/BB^n$ mit dem vorderen verbunden ist. Die Endposition wird dem Werkstückträger $1^n$ zusätzlich über den Nothaltschalter NS signalisiert.

Mit Hilfe der Datenkommunkation kann der Werkstückträger selbst erkennen, ob er sich in einer Kolonne, auf der Strecke oder vor der Warteschlange und somit vor einer Station befindet und somit, ob es um eine Notlage oder um die Versorgung mit Ladeenergie geht. Im letzteren Fall wird ihm eine entsprechende Energie-Ration zugeteilt. Bei einer Kolonne auf der Fahrstrecke ohne Energieversorgung schaltet die Steuerung auf minimalsten Stromverbrauch (Sleep-Mode). Aus diesem Zustand wird sie aufgeweckt, wenn sich der vordere Werkstückträger in Bewegung setzt und somit der Nothaltschalter NS gelöst wird.

Im Fahrbetrieb wird der Speicher SP bis auf 1,5 V entladen, um die nötige Energie für den Antriebsmotor M zu liefern. Unter 1.5 V ist es nach dem heutigen Stand der Technik schwierig, elektronische Bauelemente zuverlässig zu betreiben. Somit ist sowohl die Funktion des Endverstärkers V sowie des Hochsetzstellers H, der die Spannung für die Steuerung auf 2.3 V stabilisiert, nicht mehr gewährleistet. In den Kondensatoren C1, C2, C3 ist aber immer noch genügend Energie vorhanden ($E = U^2.C/2 = 1.5V^2 . 2,6 F = 2,95 Ws$), um eine Station anzufahren. Um diese Energie zu nutzen, werden beim Unterschreiten der kritischen Spannung von 1.5 V die Schalter S1, S3 geschlossen und die Steuerung ST und der Verstärker V abgeschaltet. Sofern der Nothaltschalter NS auch geschlossen ist (kein Hindernis im Weg), fliesst die restliche Energie direkt vom Speicher SP, ohne elektronische Schaltglieder zum Motor M. Der Werkstückträger 1 setzt sich in Bewegung bis die Fahrt durch den Nothaltschalter NS wieder unterbrochen wird. Das heisst, der Werkstückträger befindet sich in einer Station oder ist auf eine Kolonne oder Warteschlange aufgefahren und wird wieder über den geschlossenen Schalter S1 mit Energie versorgt. Durch spezielle Massnahmen beim Motor (Hilfswicklung, Umschalten von seriell verbundenen Wicklungen auf parallel verbundene Wicklungen) lassen sich sowohl die Fahrstrecke wie die Fahrgeschwindigkeit optimieren. Mit diesen Massnahmen ist es möglich, die Wahrscheinlichkeit eines manuellen Eingreifens zu senken.

Beim Ausschalten der gesamten Anlage bleiben die in einer Station befindlichen Werkstückträger stehen. Die restlichen Werkstückträger fahren solange, bis sie entweder in eine leere Station einfahren und dort den ausgeschalteten Betriebszustand der Anlage erkennen und auch warten oder bis sie auf einen weiteren Werkstückträger auffahren. Das heisst, es bilden sich vor jeder Station kleine Warteschlangen und die Strecken leeren sich. Durch das Energieübertragungssystem AS/AB' wird nun die Energie vom Werkstückträger in der Station, welcher über die Kontakte K1 versorgt wird, zum ersten Werkstückträger in der Warteschlange übertragen. Dieser wiederum überträgt die Energie über AS'/AB'' weiter zum nachfolgenden Werkstückträger. Mit diesem System wird die ganze Warteschlange mit Energie versorgt. Damit die Energieversorgung der Station nicht überlastet wird, wird die Energie für die einzelnen Werkstückträger rationiert. Die Zuteilung der Ration erfolgt anhand der Position in der Kolonne und dem Energiebedarf und wird von den Werkstückträgern selber ausgehandelt. Die Position und Zuteilung der Ration wird durch die Datenkommunikation über das Übertragungssystem BS/BB zwischen den Werkstückträgern ermöglicht. Für die Rationierung werden die folgenden Regeln angewandt:

Zuerst erhalten alle Werkstückträger mit leerem Speicher so viel Energie bis ihre Steuerung arbeitsfähig wird. Danach erhalten alle Werkstückträger so viel Energie, dass sie in der Lage sind, in der Warteschlange um eine Position nachzurücken. Der Werkstückträger 1 in der Station muss mindestens solange warten, bis alle Werkstückträger 1' - 1$^n$ diese Minimalenergie geladen haben. Anschliessend werden die Werkstückträger der Reihe nach geladen, wobei immer der Werkstückträger 1 in der Station zuerst an der Reihe ist. Sobald dieser die Station verlässt, rücken die restlichen Werkstückträger 1' - 1$^n$ nach und der jeweils nächste wird mit höchster Priorität geladen.

Auf diese Art ist es möglich, eine Anlage zu starten, wenn die Energiespeicher SP der Werkstückträger 1' - 1$^n$ komplett entladen sind. Es ist analog einfach, neue Werkstückträger 1$^n$ einzusetzen oder auf der Strecke stehen gebliebene Werkstückträger wieder in Betrieb zu nehmen. Sie werden lediglich einmal manuell zu einer Kolonne zusammen- und zu einer Station geschoben. Der restliche Ladevorgang erledigt sich von selbst.

**Patentansprüche**

1.   Werkstückträger (1) mit Speicherantrieb für ein Transfersystem das vorzugsweise für die Bearbeitung und/oder Ergänzung von Werkstücken in mindestens zwei Arbeitsstationen verwendet wird und mindestens einen Energiespeicher (SP) einen Motor (M) und eine Ladefläche (5) aufweist, die für die Aufnahme und den Transport von mindestens einem Werkstück dient, dadurch gekennzeichnet, dass in den Energiespeicher (SP), vorzugsweise während dem Aufenthalt in einer Arbeitsstation, so viel Energie geladen wird, die für die Überwindung der Strecke zur nächsten Arbeitsstation und einer Reserve, um Betriebsunterbrüche zu überbrücken, ausreicht.

2.   Werkstückträger (1) mit Speicherantrieb nach Anspruch 1, dadurch gekennzeichnet, dass der Werkstückträger mit Kontaktstellen für die Energieversorgung (K1) und der Datenkommunikation (K2) bestückt ist, die zu den Anschlüssen der Arbeitstationen passen und dass der Werkstückträger (1) mindestens ein Sensorensystem (8) aufweist, das für die Stationseinfahrt und Positionierung des Werkstückträgers (1) in der Arbeitsstation dient.

3.   Werkstückträger (1) mit Speicherantrieb nach den Ansprüchen 1 und 2, dadurch gekennzeichnet, dass der Werkstückträger (1) mit einem Abstandsensor (7) ausgerüstet ist, welcher Hindernisse, wie auch vorfahrende Werkstückträger (1$^n$) und die Andockstelle der Arbeitsstation erkennt.

4.   Werkstückträger (1) mit Speicherantrieb nach den Ansprüchen 1 bis 3, dadurch gekennzeichnet, dass der Energiespeicher (SP) die Energie vorzugsweise kapazitiv speichert und mindestens aus einem Kondensator (C1) besteht.

5.   Werkstückträger (1) mit Speicherantrieb nach den Ansprüchen 1 bis 4, dadurch gekennzeichnet, dass ein Mikrokontroller als Steuerung (ST) des Werkstückträgers (1) dient.

6. Werkstückträger (1) mit Speicherantrieb nach den Ansprüchen 1 bis 5, dadurch gekennzeichnet, dass jeder Werkstückträger ($1 - 1^n$) auf ihrer Front- und Rückseite mit einrastenden Kontaktsystemen (AB/AS und BB/BS) ausgerüstet sind, die die Ver-bindung der Werkstückträger ($1 - 1^n$) untereinander und/oder mit der Arbeitsstation zwecks Energiezuteilung und Datenkommunikation unter den Werk-stückträgern ($1-1^n$) und/oder mit der Arbeitsstation erlauben.

7. Werkstückträger (1) mit Speicherantrieb nach den Ansprüchen 1 bis 6, dadurch gekennzeichnet, dass zwischen dem Ladekontakt (K1) und dem Energiespeicher (SP) eine Diode (D) und ein Schalter (S1) zum Schutz der Ladung des Speichers (SP) stehen, damit die Energie nicht vom Speicher (SP) des Werkstückträgers (1), sondern von der Arbeitsstation über den Ladekontakt (K1) und den eingerasteten Kontaktsystemen (AS/AB') in den angedockten Werkstückträger (1') und dessen Speicher (SP') fliesst.

8. Werkstückträger (1) mit Speicherantrieb, nach den Ansprüchen 1 bis 7 dadurch gekennzeichnet, dass mehrere Werkstückträger (1, 1', 1'', $1^n$) durch die Kontaktsysteme AS/AB', AS'/AB'', $AS^{n-1}/AB^n$ und BS/BB', BB'/BS'', $BB^{n-1}/BB^n$ vorzugsweise rastend gekoppelt sind und, je nach Bedarf, Energie von der Arbeitsstation durch den Kontakt (K1) zu den Spei-chern (SP'), (SP''), ($SP^n$) fliesst und via Kontakt (K2), je nach Bedarf, die Werkstückträger (1, 1', 1'', $1^n$) durch Datentransfer unter sich und/oder mit der Arbeitsstation kommunizieren.

9. Werkstückträger (1) mit Speicherantrieb, nach den Ansprüchen 1 bis 8 dadurch gekennzeichnet, dass ein Hochsetzsteller (H) die Spannung, insbesondere des kapazitiven Speichers (SP), für die Steuerung (ST) stabilisiert.

10. Werkstückträger (1) mit Speicherantrieb, nach den Ansprüchen 1 bis 9 dadurch gekennzeichnet, dass in Front des Werkstückträgers (1) ein Notschalter (NS) plaziert ist, der bei einem Hindernis auf dem Weg den Motor (M) mit dem Schalter (S3) abschal-tet.

Fig. 1

Fig. 2

EP 1 083 022 A2